# EUROPÄISCHE PATENTSCHRIFT

(11) **EP 2 679 521 B1**
(45) Veröffentlichungstag und Bekanntmachung des Hinweises auf die Patenterteilung: **06.04.2016**
(21) Anmeldenummer: 13001193.5
(22) Anmeldetag: 09.03.2013
(51) Int. Cl.: B65G 1/02

(54) **Räderlagerregal**
Wheel storage shelf
Rayonnage pour le stockage des roues

(30) Priorität: 27.06.2012 DE 202012006222 U
(43) Veröffentlichungstag der Anmeldung: 01.01.2014
(73) Patentinhaber: Homburg, Frank, 34292 Ahnatal (DE)
(72) Erfinder: Homburg, Frank, 34292 Ahnatal (DE)
(74) Vertreter: Walther, Walther & Hinz GbR

(56) Entgegenhaltungen:
- WO-A1-00/27733
- WO-A1-2012/045987
- US-A- 3 674 159
- US-A1- 2006 037 832

## Beschreibung

Die Erfindung betrifft ein Räderlagerregal gemäß dem Oberbegriff des Anspruchs 1.

Jedes Jahr im Frühjahr und im Herbst findet ein Wechsel von Winter- zu Sommerreifen und umgekehrt statt. Häufig ist es so, dass bei dem Reifendienst, der einen solchen Radwechsel vornimmt die entsprechenden Räder für den Kunden gegen Entgelt eingelagert werden. Hierfür sind Räderlagerregale bekannt, bei denen die Räder eines Radsatzes hintereinander stehend aufgenommen werden. Zur stehenden Aufnahme der einzelnen Räder weisen die Regale entsprechende Mulden auf, wobei zur Entnahme der Räder aus dem Regal teleskopierbare Arme vorgesehen sind, deren maximale Länge derart ist, dass diese von der Ausgabeseite her gerechnet bis etwa zur Mitte der Felge des letzten Rades reichen. Es hat sich herausgestellt, dass es hierbei immer wieder zu Beschädigungen der Felge kommt, was insbesondere bei teuren Felgen äußerst ärgerlich ist. Der Grund hierfür ist darin zu finden, dass diese Arme entweder an den benachbarten Felgen entlang schrappen und es insofern zu einer Beschädigung kommt, oder aber wenn benachbarte Räder bereits entnommen worden sind, die Räder des noch lagernden Radsatzes umfallen, auf die Außenseite, d. h. der Sichtseite der Felge aufschlagen, und hierdurch die Felge beschädigt wird. Des Weiteren besteht auch die Gefahr der Beschädigung der Felge beim Absetzen des senkrecht aus dem Regal herausgenommenen Rades, wenn nämlich das Rad auf dem Boden umfällt. Eine andere Variante zeichnet sich dadurch aus, dass die Felgen durch Trennbügel voneinander getrennt sind, wobei hierbei auch die Gefahr besteht, dass die Felgen durch diese Trennbügel beschädigt werden.

Wenn die Räder demzufolge bereits mit ihrer Innen- oder Rückseite auf der Aufnahmeeinrichtung liegen, so kann eine Beschädigung der Felge durch Umfallen des Rades nicht mehr geschehen. Darüber hinaus besteht die Möglichkeit die einzelnen Räder mittels einer

Ein weiteres Beispiel eines automatisierten Räderlagerregales ist aus WO 2012/045987 A1 bekannt. Dieses Dokument offenbart den Oberbegriff des Anspruchs 1. Dort werden die Räder in einem mit Rollenbahnen vorgesehenen Lagerregal liegend aufgenommen. Die Räder werden durch die Schwerkraft bis zu einem Anschlag befördert.

Die Aufgabe der Erfindung wird darin gesehen, ein einfacheres Räderlagerregal zu schaffen, bei dem die Gefahr der Beschädigung der Felge eines Rades nicht besteht.

Zur Lösung der Aufgabe wird ein Räderlagerregal gemäß Anspruch 1 vorgeschlagen.

Gabel eines Gabelstaplers zu entnehmen, d. h. es sind keine gesonderten Einrichtungen erforderlich um die Räder, wie dies nach dem Stand der Technik der Fall ist im Bereich der Felge zu erfassen, wofür gesondert ausgebildete teleskopierbare Arme erforderlich sind, wie dies bereits beschrieben worden ist. Darüber hinaus hat sich herausgestellt, dass durch eine liegende Lagerung der Räder etwa eine 30 % höhere Lagerkapazität zur Verfügung steht. Auch die Gefahr des Verkantens oder Verkippens der Räder in der Mulde für die Aufnahme eines Rades besteht nicht mehr.

Erfindungsgemäß weist die Aufnahmeeinrichtung eine Schwerkraftfördereinrichtung zum Transport der Räder auf die Ausgabeseite auf, wobei an der Ausgabeseite das dort jeweils lagernde Rad durch eine Halteeinrichtung gehalten ist. Hieraus wird Folgendes deutlich:
Die Aufnahmeeinrichtung besteht aus zwei Abschnitten, nämlich einer Schwerkraftfördereinrichtung, die der Aufnahme von drei Rädern dient, und eine Halteeinrichtung, auf der das vordere, der Ausgabeseite zugeordnete Rad lagert. Wird nun das auf der Ausgabeseite befindliche Rad abgenommen, dann werden die auf der Schwerkraftfördereinrichtung lagernden drei Räder in Richtung auf die Halteeinrichtung zu bewegt, wobei dann das vordere Rad ebenfalls auf der Halteeinrichtung zu liegen kommt, und die hinteren beiden Räder auf der Schwerkraftfördereinrichtung hält. Das heißt, das vordere der Ausgabeseite zugeordnete Rad fungiert als Anschlag für die dahinter liegenden sich auf der Schwerkraftförder-einrichtung befindlichen Räder. Hieraus wird aber auch deutlich, dass die Halteeinrichtung derart ausgebildet sein muss, dass die Reibung derart ist, dass nicht die hinteren Räder beim Nachrutschen nach Entnahme des vorderen Rades das jeweils vordere Rad über die Halteeinrichtung hinaus schieben. Dies kann, dadurch geschehen, dass die Halteeinrichtung als Lagerboden und insbesondere als Riffelblech ausgebildet ist. Die Schwerkraftfördereinrichtung selbst kann als Rollenbahn ausgebildet sein, wobei die Länge der Rollenbahn etwa dem Durchmesser von drei Rädern entspricht. Eine jede Rollenbahn weist im Einzelnen vorteilhaft mindestens zwei parallel zueinander verlaufende Röllchenleisten auf, wobei allerdings auch drei oder mehr Röllchenleisten pro Rollenbahn vorgesehen sein können. Die Rollenbahn und damit auch die Röllchenleisten sind winklig zur Horizontalen im Räderlagerregal aufgenommen, so dass die darauf lagernden Räder sich unter Einfluss der Schwerkraft auf die Ausgabeseite zu bewegen, d. h. die Rollenbahn ist in Richtung auf die Ausgabeseite zu geneigt. Röllchenleisten sind im Handel käuflich zu erwerben, wobei eine solche Röllchenleisten sich als ein im Querschnitt U-förmiges Profil darstellt, wobei in den Schenkeln des U-förmigen Profiles die Achsen der hintereinander angeordneten Röllchen gehalten sind. Die Röllchen stehen hierbei über die Schenkel der im Querschnitt U-förmigen Profilleiste über.

Anhand der Zeichnungen wird die Erfindung nachstehend beispielhaft näher erläutert.

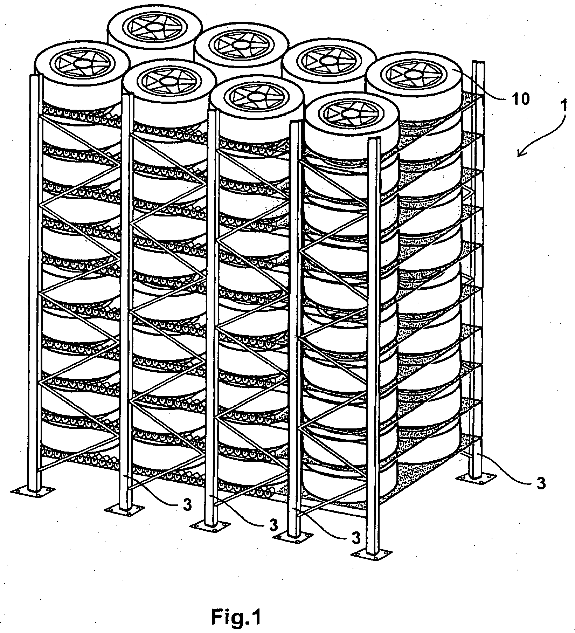

- Fig. 1: zeigt eine schematische Darstellung des Räderlagerregals;

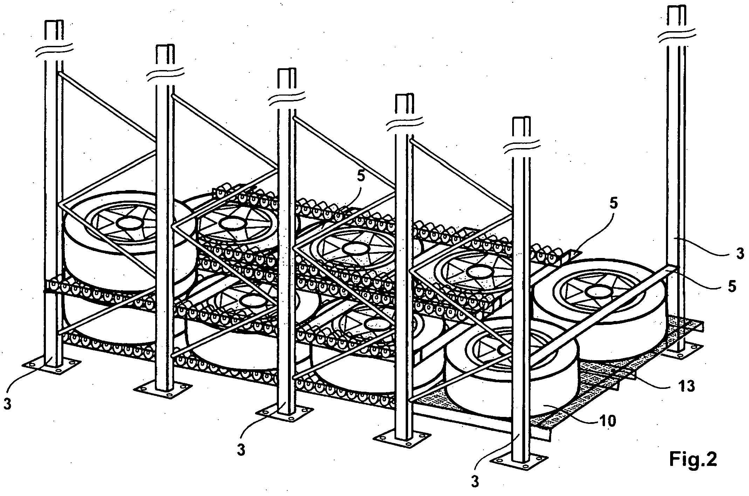

- Fig. 2: zeigt einen Ausschnitt aus dem Räderlagerregal;

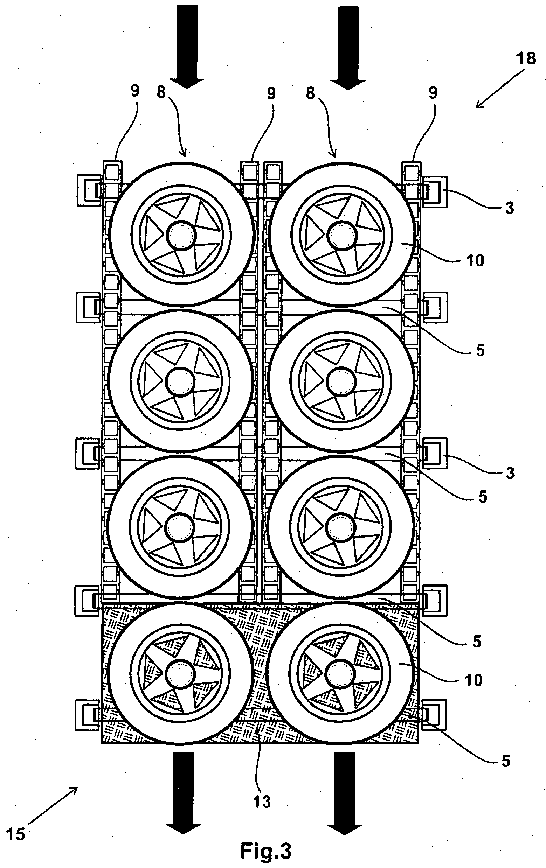

- Fig. 3: zeigt eine Ansicht von oben auf das Räderlagerregal.

Das mit 1 bezeichnete Räderlagerregal umfasst mehrere nebeneinander und hintereinander angeordnete Stützen 3. Die Stützen 3 sind durch horizontal verlaufende Querstreben 5 miteinander verbunden, wobei der Abstand zweier Querstreben 5 in der Höhe etwa der Breite eines Rades 10 entspricht. Auf den Querstreben lagern zur Aufnahme jeweils eines ¾ Radsatzes eine Rollenbahn 8 bildend zwei Röllchenleisten 9. Der Abstand der beiden eine Rollenbahn 8 bildenden Röllchenleisten 9 ist hierbei geringer als der Durchmesser eines Rades. An die Rollenbahn 8 anschließend befindet sich ein Lagerboden 13, der als Riffelblech ausgebildet ist. Der Lagerboden 13 weist eine Breite auf, die etwa mit dem Durchmesser eines Rades entspricht.

Das Radlagerregal kann zwei zugängliche Seiten aufweisen, nämlich die sogenannte Ausgabeseite 15 und die Aufgabeseite 18. Insofern besteht die Möglichkeit, von der Ausgabeseite 15 jeweils ein Rad eines Radsatzes zu entnehmen, wobei dann die nachfolgenden dahinter liegenden Räder, die sich auf der Rollenbahn befinden, aufgrund der schrägen Anordnung der Rollenbahn, d. h. des Gefälles der beiden parallel zueinander verlaufenden Röllchenleisten, diese Räder 10 nachrutschen bis das vordere der drei Räder den Lagerboden 13 erreicht, auf dem es abgebremst wird und liegen bleibt, sodass dieses Rad als Anschlag für die auf der Rollenbahn dahinter befindlichen Räder dient. Die Räder können entweder auf der Ausgabeseite wieder eingelagert werden, und zwar indem sie ausgabeseitig zunächst über den Lagerboden geschoben werden, bis sie auf die Rollenbahn 8 gelangen. Hierbei könnten auch zwei Räderlagerregale Rücken an Rücken gestellt werden, um eine höhere Lagerdichte zu erzielen. Eine andere Möglichkeit besteht darin, Räder aufgabeseitig bei 18 dem Räderlagerregal zuzuführen. Hierbei wird dann das erste Rad 10 bis nach vorne auf den Lagerboden 13 rollen oder rutschen und dort liegen bleiben.

### Bezugszeichenliste:

- 1: Räderlagerregal
- 3: Stützen
- 5: Querstreben
- 8: Rollenbahn
- 9: Röllchenleiste
- 10: Rad
- 13: Lagerboden (Riffelblech)
- 15: Ausgabeseite
- 18: Aufgabeseite

## Patentansprüche

1. Räderlagerregal umfassend ein Gestell mit mehreren übereinander in dem Gestell angeordneten Aufnahmeeinrichtungen für die Räder, wobei jede Aufnahmeeinrichtung eine Schwerkraftfördereinrichtung zum Transport der Räder (10) auf die Ausgabeseite (15) zu aufweist, wobei die Räder (10) eines Radsatzes liegend und in Bezug auf die Ausgabenseite (15) hintereinander aufgenommen sind, wobei an der Ausgabeseite (15) das dort jeweils lagernde Rad (10) durch eine Halteeinrichtung gehalten ist,
**dadurch gekennzeichnet,**
**dass** die Halteeinrichtung als Lagerboden (13) in etwa der Größe eines Rades derart ausgebildet ist, dass die Reibung des Rades auf dem Lagerboden (13) derart ist, dass sich nicht die hinteren Räder beim Nachrutschen nach Entnahme des vorderen Rades über den Lagerboden (13) hinausschieben.

2. Räderlagerregal nach Anspruch 1,
**dadurch gekennzeichnet,**
**dass** die Schwerkraftfördereinrichtung als Röllenbahn (8) ausgebildet ist.

3. Räderlagerregal nach einem der voranstehenden Ansprüche,
**dadurch gekennzeichnet,**
**dass** der Lagerboden (13) als Riffelblech ausgebildet ist.

4. Räderlagerregal nach einem der Ansprüche 2 oder 3,
**dadurch gekennzeichnet,**
**dass** die Länge der Rollenbahn (8) etwa dem Durchmesser von drei Rädern (10) entspricht.

5. Räderlagerregal nach einem der Ansprüche 2 bis 4,
**dadurch gekennzeichnet,**
**dass** die Rollenbahn (8) mindestens zwei parallel zueinander verlaufende Röllchenleisten (9) umfasst.

6. Räderlagerregal nach einem der Ansprüche 2 bis 5,
**dadurch gekennzeichnet,**
**dass** die Rollenbahn (8) ein Gefälle zur Ausgabeseite des Räderlagerregals (1) aufweist.

## Claims

1. A wheel storage rack comprising a frame with multiple receiving devices for the wheels, arranged on top of each other in the frame, wherein each receiving device has a gravity conveyor for transporting the wheels (10) toward the output side (15), wherein the wheels (10) of a wheel set are received horizontally and behind one another relative to the output side (15), wherein the wheel (10) respectively stored at the output side (15) is held there by a retention device,
**characterized in that**
the retention device is designed as a storage floor (13) having approximately the size of a wheel, in such a manner that the friction of the wheel on the storage floor (13) is such that the rearward wheels do not slide beyond the storage floor (13) after the front wheel is removed.

2. The wheel storage rack according to claim 1,
**characterized in that**
the gravity conveyor is designed as a roller conveyor (8).

3. The wheel storage rack according to one of the afore-mentioned claims,
**characterized in that**
the storage floor (13) is designed as a checker plate.

4. The wheel storage rack according to one of the claims 2 or 3,
**characterized in that**
the length of the roller conveyor (8) corresponds approximately to the diameter of three wheels (10).

5. The wheel storage rack according to one of the claims 2 to 4,
**characterized in that**
the roller conveyor (8) comprises at least two roller rails (9) running parallel to each other.

6. The wheel storage rack according to one of the claims 2 to 5,
**characterized in that**
the roller conveyor (8) has a slope toward the output side of the wheel storage rack (1).

## Revendications

1. Rayonnage pour le stockage de roues comportant une structure avec plusieurs dispositifs de réception pour les roues disposés les uns au-dessus des autres dans la structure, où chaque dispositif de réception comporte un convoyeur par gravité pour transporter les roues (10) vers le côté sortie (15), où les roues (10) d'un jeu de roues sont reçues à plat et les unes derrière les autres par rapport au côté sortie (15), où la roue (10) respectivement stockée au niveau du côté sortie (15) est retenue par un dispositif de retenue,
**caractérisé en ce que**
le dispositif de retenue est configuré sous la forme d'un sol de stockage (13) ayant approximativement la taille d'une roue, de telle manière que la friction de la roue sur le sol de stockage (13) est telle que les roues à l'arrière ne glissent pas au-delà du sol de stockage (13) après l'enlèvement de la roue située à l'avant.

2. Rayonnage pour le stockage de roues selon la revendication 1,
**caractérisé en ce que**
le convoyeur par gravité est configuré sous la forme d'un convoyeur à rouleaux (8).

3. Rayonnage pour le stockage de roues selon l'une quelconque des revendications précédentes,
**caractérisé en ce que**
le sol de stockage (13) est configuré sous la forme d'une tôle gaufrée.

4. Rayonnage pour le stockage de roues selon l'une des revendications 2 ou 3,
**caractérisé en ce que**
la longueur du convoyeur à rouleaux (8) correspond approximativement au diamètre de trois roues (10).

5. Rayonnage pour le stockage de roues selon l'une des revendications 2 à 4,
**caractérisé en ce que**
le convoyeur à rouleaux (8) comprend au moins deux rails à galets (9) s'étendant parallèlement l'un à l'autre.

6. Rayonnage pour le stockage de roues selon l'une des revendications 2 à 5,
**caractérisé en ce que**
le convoyeur à rouleaux (8) comporte une pente en direction du côté sortie du rayonnage pour le stockage de roues (1).
